# EUROPEAN PATENT APPLICATION

(11) **EP 2 746 981 A1**
(43) Date of publication of application: **25.06.2014**
(21) Application number: 13368034.8
(22) Date of filing: 20.09.2013
(51) Int. Cl.: G06F 21/53, G06F 21/74

(54) **Trusted execution environment access control rules derivation**

(30) Priority: 19.12.2012 EP 12306628
(71) Applicant: ST-Ericsson SA, 1228 Plan-les-Ouates (CH)
(72) Inventor: Sibert, Hervé, 72000 Le Mans (FR)
(74) Representative: Hutchinson, Thomas Owen

(57) **Abstract**

An access control method for Trusted Applications (20) characterised by inferring an access control rule (28) for a Trusted Application (20) from a rule (26) applied in a Rich OS (12) to a Rich OS application (16). The access control method is suitably implemented in a system comprising a Rich Execution Environment (12) and a Trusted Execution Environment (14), and whereby for each facility for which access control rules (24, 26) is defined in the Rich OS (12), a corresponding set of access control rules (28, 29) is defined in the TEE (14). An apparatus is also disclosed, which comprises a TEE (12) capable, in use, of running Trusted Applications (20) and a Rich OS (12) capable, in use, of running Rich applications (16), a secured interface between Rich OS (12) and the TEE (14), characterised by each Rich application (16) having access rights to facilities defined by an access control protocol (22) comprising access control rules (24) for the Rich OS application (16); and by the TEE (14) comprising a Session Access Control module (29) adapted in use, to block or allow sessions (18) from the Rich application (16) to a Trusted Application (20), wherein the session access control module (29) is configured to accept or deny session requests (18) depending on the context of the request (18).

## Description

The present invention generally relates to access control for Trusted Applications to Rich OS applications. The invention is applicable in particular, but without limitation, to Integrated Circuits (IC) for wireless products such as mobile terminal devices (e.g. cell phones, smart phones, etc.), portable digital media players (e.g. MP3 and MP4 players), portable computers, wireless tablets, portable navigation systems, portable gaming devices, etc.

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

A Trusted Execution Environment (TEE) is a kind of secure operating system, executing in parallel with a rich operating system such as Android, and sharing several resources with the rich operating system. The processor and system executing the TEE ensure that the resources used by the TEE during runtime are properly isolated from the Rich OS. Such resources may comprise the processing core, including processor registers, the volatile memory (e.g., cache memory, on-chip (eSRAM) and/or off-chip (DDR) memory) that the TEE uses, and some peripherals such as system registers, cryptographic engines etc.

A convenient hardware (HW) base to build a TEE is for instance the ARM TrustZone platform, which virtually divides the processor core into two virtual processors, namely one secure processor running the TEE, and the other non-secure processor running the Rich OS. This technology, when properly implemented on the system-on-chip (SoC) and extended with memory protections and access control on peripherals, ensures that the TEE executed by the processor in secure mode is properly isolated from the Rich OS.

The industry consortium GlobalPlatform defines such a TEE, as well as the interfaces it provides to so-called "Trusted Applications" executing on top of the TEE (the TEE Internal API), and also the TEE Client API used by the Rich OS client applications to invoke Trusted Applications. The specifications are available at http://www.globalplatform.org/specificationsdevice.asp

The Client protocol is quite simple: a client process/thread opens a session towards a Trusted Application by providing the ID of the Trusted Application, and can send commands to the Trusted Application within this session.

In the TEE execution model, therefore, a Trusted Application (TA) is active only within sessions opened by a Client. This Client can be a Rich OS process/thread, or another session of a Trusted Application.

A generic problem with the TEE subsists in controlling whether a Trusted Application may use specific functions from the TEE Internal API. For instance, one may want to restrict the usage of the functions providing access to, and/or control of, a specific peripheral with which the TEE has a direct connection, such as a Secure Element, a display controller, an HDMI connection and so on.

The way this access control is implemented in all existing solutions relies on identification of the Trusted Application, such as the UUID of the Trusted Application. This is for instance the way chosen for implementing the Access Control to the Secure Element for Trusted Applications.

The issue with existing solutions is that specific Trusted Applications access rights must be implemented and enforced, with rules formatted specifically for Trusted Applications. This yields the implementation of a specific access control framework, while such framework may already exist in the Rich OS.

Moreover, as several different Client applications may have to invoke the same Trusted Application, providing access control based only on Trusted Applications identity may not provide a sufficient level of granularity.

A need therefore exits for an improved and/or an alternative access control methodology and/or system which addresses one or more of the above problems. In particular, a need exists for a solution to the problem of the implementation of access controls in a TEE.

A first aspect of the invention provides an access control for Trusted Applications characterised by inferring an access control rule for a Trusted Application from a rule applied in a Rich OS to Rich OS applications.

Suitably, the access control is implemented in a system comprising a Rich Execution Environment (REE), such as a Rich OS, and a Trusted Execution Environment (TEE), and whereby for each facility for which access control rules is defined in the Rich OS, a corresponding set of access control rules is defined in the TEE, which set can be empty if no TEE Internal API functions provide the corresponding access.

The access control suitably operates whenever a Rich OS application opens a session towards a Trusted Application. In such a situation, the session towards the Trusted Application forwards the identity of the Rich OS application that opened the session to the Trusted Application, whereupon the Trusted Application can decide whether or not to accept the identity of the Rich OS application that opened the session, and to allow the session. In the case where a further session is opened from this session to another Trusted Application, the resulting Trusted Application-to-Trusted Application session may use the same Rich OS application identity: in other words, the identity, once accepted by a Trusted Application, may be passed-though to subsequent Trusted Application sessions. In each case of passing-though of the identity, the subsequent Trusted Applications may decide whether or not to accept the identity.

The access control facility in the TEE suitably uses the rules corresponding to those implemented in the Rich OS to decide whether to allow calls to TEE internal API functions that correspond to the facilities (peripherals etc.) which are access-controlled in the Rich OS. The rules may depend on the functions only (e.g. full access or no access to a specific set of functions from the TEE Internal API), on the parameters in the calls to the functions, or any other rule providing an equivalent to the rules in the Rich OS.

Additionally, an access control system may be added inside the TEE in order to restrict, for each TA, the set of Rich OS applications identities allowed to be carried by sessions to the TA.

A second aspect of the present invention relates to a computer program product comprising one or more stored sequences of instructions that are accessible to a processor and which, when executed by the processor, cause the processor to carry out the steps of the method of the first aspect.

A third aspect of the present invention relates to an apparatus having means for implementing the steps of the method of the first aspect.

A fourth aspect of the present invention relates to a user device, for example a wireless device comprising an apparatus according to the third aspect. Examples of such wireless devices include those listed in the introduction of the present description.

Embodiments of the invention shall now be described, by way of example only, with reference to the accompanying drawings in which:

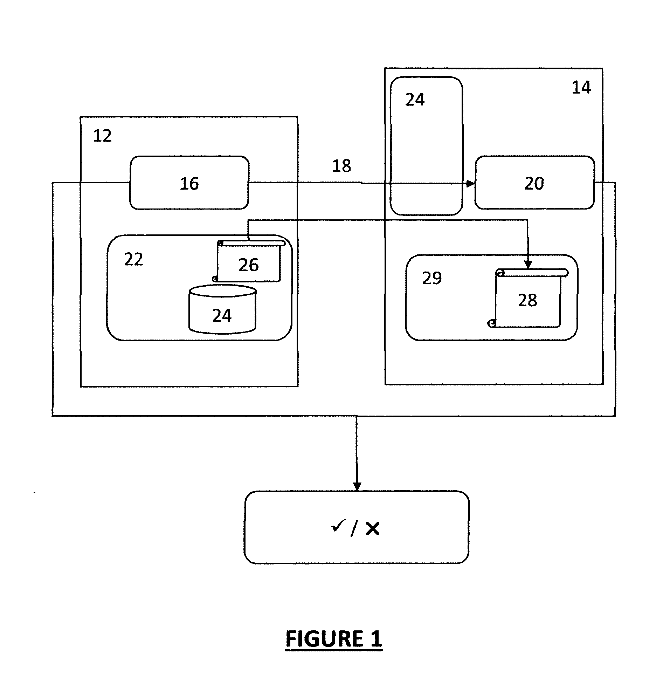

Figure 1 is a functional block diagram of a system with a TEE, illustrating the operation of a session.

In the following description of the embodiment illustrated in the drawings, the following abbreviations and acronyms are used:
- AID: Applet IDentifier;
- OS: Operating System;
- SE: Secure Element - smartcard-like element (secure microcontroller with peripherals), which can be stand-alone, soldered to the circuit board, or embedded in components such as the SIM card, a microSD card...
- TA: Trusted Application;
- TEE: Trusted Execution Environment; and,
- UUID: Universal Unique Identifier.

Referring to Figure 1, a system 10 comprises a Rich OS 12 that interfaces with a TEE 14.

The Rich OS 12 can be any OS, for example, Android^{RTM}, in which each user application/process 16 has its access rights to facilities defined by an access control protocol 22. The protocol 22 comprises access control rules 24 for the Rich OS application 16, such as access to SMS API, access to Phonebook, access to the Secure Element API restricted to communicating with the Secure Element applet with AID x, etc.

The Rich OS 12 executes an application 16, which attempts to initiate a session 18 towards a Trusted Application 20 of TEE 14.

Meanwhile, the TEE 14 comprises a Session Access Control module 24, which either blocks or allows the session 18 from the Rich application 16 to the Trusted Application 20. The session access control module 24 is configured to accept or deny session requests 18 depending on the context of the request 18.

The decision about whether the access to any facility is granted or not may be based on an execution context, which contains, in particular, an application 16 identifier (ID). Without loss of generality, we will assume in what follows that, for any application 16 at any point in time, the same execution context is used for all the rules, i.e. the execution of an application yields a context, and each rule is under the form "if context does/does not fulfill certain properties, grant/restrict access". The execution context of an application is called the "access control context".

The Rich OS 12 may embed a TEE that executes Trusted Applications. Rich OS user applications 16 communicate with the Trusted Applications 20 using a communication protocol based on sessions 18, such as the GlobalPlatform TEE Client API. A Trusted Application 20 only runs in the context of such a session. Sessions can be opened from a Trusted Application 20 to another Trusted Application. Whenever a session is opened, the session is populated with the access control context of its client. This applies both to the cases where the client is a Rich OS application 16 or another Trusted Application session: as, initially, all sessions are opened by Rich OS clients, this ensures that all Trusted Applications sessions have an access control context.

The access control 22 of the Rich OS 12 contains a set of rules 24, and certain of those rules 24 are specific 26 to particular applications 16. Thus, for each access control rule 26 for user applications 16 in the Rich OS 12, a corresponding rule 28 may be defined in an access control 29 of the TEE 14 for Trusted Applications 20, in the following way:
if the TEE 14 does not offer a facility that corresponds to the facility controlled in the Rich OS 12, the corresponding TEE rule 28 is empty;
if the TEE 14 does offer a corresponding facility, a rule 28 in the TEE 14 is defined that corresponds to the rule 26 in the Rich OS 12, such that a Trusted Application 20 to which the rule 28 in the TEE 14 is applied may not perform actions that are not accessible to a Rich OS application 16 to which the Rich OS rule 26 is applied.

In particular, the Rich OS 12 may contain an interface that allows communicating with a Secure Element, called the Rich OS SE API. For each Rich OS application 16, a rule 26 may specify whether the application 16 can use the SE API, and if so, the set of Secure Element applets (a set of Applet IDs - AIDs) and commands to the applets that can be used by the application 16. The TEE Internal API may also contain a Secure Element API, so that for each Rich OS rule 26 related to the Rich OS SE API, the same rule 28 is defined in the TEE for the TEE SE API.

Finally, the access of Trusted Applications 20 to the TEE Internal API may be controlled by using the access control context in the sessions, and the TEE rules 28 that have been defined to correspond to the Rich OS rules 26.

In alternative embodiments, a set of access control rules to Trusted Applications themselves is implemented in the TEE. Depending on the access control context, the TEE may control whether to open or not a session to a specific TA, as well as the commands and arguments to the commands used by the Rich OS application for the TA.

It will be appreciated that the access control rules used by the TEE may need to be protected against unauthorized modifications, which can be done with standard cryptographic means. Defining how access control rules can be protected from corruption would go beyond the scope of the present description.

A possible advantage of the invention is that, whenever the TEE Internal API provides a sub-API that is the equivalent of an API in the Rich OS, the implementation of access control is straightforward.

The invention may also provide finer-grained access control than access control based on pure Trusted Applications context, such as TA UUIDs. For instance, a Trusted Application may need to interact with only specific Secure Element applets depending on who is the caller of the Trusted Application.

In terms of security, if the Rich OS is compromised, then the access control context may be corrupted, but the rules will still be applied, so it is not possible for a Trusted Application to perform an action that it should never access no matter the access control context. Moreover, it brings an additional layer of security as, if the Rich OS is compromised, but not to a level where the access control context is fully under control of the attacker, then the access control is still finer-grained than if it were based on TA identity only. In particular, whenever the Rich OS security is not compromised, this system facilitates preventing Rich OS client applications from accessing functionality that they should not access with the access rights they have in the Rich OS.

The present invention can also be embedded in a computer program product, which comprises all the features enabling the implementation of the methods described herein, and which - when loaded in an information processing system - is able to carry out these methods. Computer program means or computer program in the present context mean any expression, in any language, code or notation, of a set of instructions intended to cause a system having an information processing capability to perform a particular function either directly or after either or both of the following a) conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the invention as broadly defined above.

A person skilled in the art will readily appreciate that various parameters disclosed in the description may be modified and that various embodiments disclosed and/or claimed may be combined without departing from the scope of the invention.

## Claims

1. An access control method for Trusted Applications (20) **characterised by** inferring an access control rule (28) for a Trusted Application (20) from a rule (26) applied in a Rich OS (12) to a Rich OS application (16).

2. The access control method of claim 1, implemented in a system comprising a Rich Execution Environment (12) and a Trusted Execution Environment (14), and whereby for each facility for which access control rules (24, 26) is defined in the Rich OS (12), a corresponding set of access control rules (28, 29) is defined in the TEE (14).

3. The access control method of claim 2, wherein the corresponding set of access controls (28) defined in the TEE (14) is empty if no TEE Internal API functions provide the corresponding access.

4. The access control method of any preceding claim, comprising the steps of: a REE application (16) opening a session (18) towards a Trusted Application (20); forwarding an identity of the Rich OS application (16) that opened the session (18) to the Trusted Application (20) and the Trusted Application (20) deciding whether or not to accept the identity of the Rich OS application (16) that opened the session (18).

5. The access control method of claim 4, further comprising the step of the opening a further session from the said Trusted Application to another Trusted Application, the resulting Trusted Application-to-Trusted Application session, wherein the same Rich OS application identity is used to authenticate the said Trusted Application-to-Trusted Application session.

6. The access control method of claim 5, wherein each subsequent Trusted Application decides whether or not to accept the said identity.

7. The access control method of any preceding claim, wherein the TEE 14 uses the rules (28) corresponding to those (26) implemented in the Rich OS (12) to decide whether to allow calls to TEE internal API functions that correspond to facilities which are access-controlled in the Rich OS (12).

8. The access control method of claim 7, wherein the rules (28) depend on the functions only, on the parameters in the calls (18) to the functions, or any other rule providing an equivalent to the rules (24) in the Rich OS (12).

9. The access control method of any preceding claim, further comprising providing an access control (29) in the TEE (14) for restricting, in use, and for each Trusted Application (20) a set of Rich OS application identities allowed to be carried by sessions (18) to the Trusted Application (20).

10. A computer program product comprising one or more stored sequences of instructions that are accessible to a processor and which, when executed by the processor, cause the processor to carry out the steps of any preceding claim.

11. An apparatus having means for implementing the steps of any of claims 1 to 10.

12. The apparatus of claim 11, comprising a TEE (12) capable, in use, of running Trusted Applications (20) and a Rich OS (12) capable, in use, of running Rich applications (16), a secured interface between Rich OS (12) and the TEE (14), **characterised by** each Rich application (16) having access rights to facilities defined by an access control protocol (22) comprising access control rules (24) for the Rich OS application (16); and by the TEE (14) comprising a Session Access Control module (29) adapted in use, to block or allow sessions (18) from the Rich application (16) to a Trusted Application (20), wherein the session access control module (29) is configured to accept or deny session requests (18) depending on the context of the request (18).

13. The apparatus of claim 12, wherein the session access control module (29) comprises a set of rules 28 corresponding to application-specific rules 26 of the Rich OS 12.

14. The apparatus of any of claims 11, 12 or 13, further comprising a cryptographic module adapted, in use, to protect against unauthorized modifications to the rules (28).
